# EUROPÄISCHE PATENTSCHRIFT

(11) **EP 1 171 261 B1**
(45) Veröffentlichungstag und Bekanntmachung des Hinweises auf die Patenterteilung: **09.04.2003**
(21) Anmeldenummer: 01913548.2
(22) Anmeldetag: 31.01.2001
(51) Int. Cl.: B23Q 11/00

(54) **HANDWERKZEUGMASCHINE MIT STAUBABSAUGUNG**
HAND-HELD TOOL WITH DUST EXTRACTION
MACHINE PORTABLE DOTEE DE MOYENS D'ASPIRATION DE POUSSIERE

(30) Priorität: 10.02.2000 DE 10005976
(43) Veröffentlichungstag der Anmeldung: 16.01.2002
(73) Patentinhaber: ROBERT BOSCH GMBH, 70442 Stuttgart (DE)
(72) Erfinder: REICH, Doris, 70565 Stuttgart (DE); WUENSCH, Steffen, 71088 Holzgerlingen (DE); HOFFMANN, Andreas, 71364 Winnenden (DE); MUELLER-BOYSEN, Ulrich, 73732 Esslingen (DE); SCHESCHARK, Franz, 74196 Neuenstadt (DE)
(86) Internationale Anmeldenummer: DE0100361
(87) Internationale Veröffentlichungsnummer: WO01058642

(56) Entgegenhaltungen:
- EP-A- 0 434 295
- EP-A- 0 548 782
- EP-A- 0 558 253
- US-A- 4 192 390
- US-A- 5 467 835

## Beschreibung

### Stand der Technik

Die Erfindung geht aus von einer Handwerkzeugmaschine nach der Gattung des Anspruchs 1.

Aus der US 4,192,390 ist ein Bohrhammer bekannt, der über eine eigene Staubabsaugung verfügt, mit der anfallender Bohrstaub - nach dem Staubsaugerprinzip mit Saugluft - in eine verhältnismäßig kompliziert am Bohrhammer montierte Staubbox saugbar ist, wobei die Saugluft einen plattenförmiges Staubfilter passiert, an dem sich der Bohrstaub abscheidet und sich in der Staubbox sammelt. Die Staubbbox ist zum Verbleib am Bohrhammer bestimmt und hat einen aufklappbaren Boden zum Entleeren des Bohrstaubs.

Durch die US 5,467,835 ist ein anderer Bohrhammer bekannt, der über eine Staubabsaugeinrichtung verfügt, mit der anfallender Bohrstaub - ebenfalls nach dem Staubsaugerprinzip mit Saugluft - in eine gesonderte, in einem Gehäuses lösbar eingesetzte Staubbbox saugbar ist. Vor deren Absaugöffnung zum Saugventilator hin ist ein Faltenfilter angeordnet, an dem sich beim Passieren der Saugluft der Staub abscheidet und in der Staubbox sammelt, so daß reine Luft zum Saugventilator hin transportiert wird. Zum Entleeren des Bohrstaubs ist die Staubbox aus dem Gehäuse entnehmbar und der Bohrstaub durch die Eintrittsöffnung ausschüttbar.

Die Staubboxen der beiden bekannten Bohrhämmer sind nur verhältnismäßig umständlich entleerbar, wobei der Wechsel des Platten- bzw. Faltenfilters kompliziert ist. Außerdem sind diese Staubboxen ungeeignet zur freitragenden Befestigung an Handwerkzeugmaschinen mit integrierter Staubabsaugung zum Einblasen des Staubes.

Es sind auch Handwerkzeugmaschinen bekannt, die mit als Staubbox dienenden Kunststoffkassetten versehen sind, welche entweder - in der Art eines Grassammelbehälters für Rasenmäher - mit einer Vielzahl von Luftdurchlassöffnungen versehen und mit Filtermaterial ausgekleidet sind oder die aus porösem, wenig formsteifem, luftdurchlässigem Kunststoff bestehen, der die den Staub einblasende Luft gereinigt aus dem Behälter entlassen und den Staub darin zurückhalten soll. Beide Kunststoffkassetten neigen zum Verstopfen, sind nur mit erheblichem Aufwand zu entleeren und zu reinigen.

Es ist keine Lösung bekannt, bei denen ein Element das Herausfallen des Staubes unmittelbar nach Abschalten des Gerätes selbsttätig verhindert und gleichzeitig die Abdichtung der Staubbox im Anschlußstutzenbereich zum Gerät gewährleistet.

Bei der bekannten Staubbox ist eine speziell angeformte Dichtlippe gleichen Gehäusematerials mit angespritzt. Dies ist nur realisierbar, wenn als Gehäusematerial relativ weiches Material wie PP verwendet wird. Bei Staubbox-Gehäusewerkstoffen wie z.B. PA6 oder Leichtmetalldruckguß müssen statt dessen separate gummielastische Dichtungen angebracht werden.

### Vorteile der Erfindung

Die erfindungsgemäße Handwerkzeugmaschine mit Staubabsaugung mit den Merkmalen des Anspruchs 1 hat demgegenüber den Vorteil, daß eine besonders leichte und kompakte Staubbbox geschaffen wurde, die ein großes eingeblasenes Staubvolumen ohne Verlust der Eigenstabilität aufnehmen kann, wobei praktisch bis zur maximalen Füllung die Absaugung des Schleifstaubs vom Werkzeug mit gleichbleibend hohem Wirkungsgrad und hoher Filterstandzeit bei verbesserter Feinstaubfilterung erfolgen kann.

Dadurch, daß sich die Staubbbox außer am Staubausblasstutzen der Handwerkzeugmaschine mit einem Vorsprung seines oberen Deckels an der Handwerkzeugmaschine festhält, sind die Verformungskräfte bei voller Staubfüllmenge so verringert, daß die Wandquerschnitte der Staubbbox gering sein können und diese dadurch besonders leicht aber stabil ist, d.h. nicht

Dadurch, daß die Staubbbox als oben offener Kasten mit lösbarem, die Öffnung von oben verschließendem Deckel versehen ist, tritt ein nur geringer Druckverlust beim Staubabsaugen auf, wobei durch Öffnen des Deckels der Staub besonders bequem ohne Verwirbelung und Belastung der Umwelt entsorgt werden kann.

Dadurch, daß nur der Deckel ein Filter, insbesondere Faltenfilter, trägt und als einziger Teil der Staubbox mit Luftdurchtrittsöffnungen versehen ist, kann die Filterfläche besonders groß dimensioniert werden. Dadurch staut sich die den Staub transportierende Luft nur minimal und der Wirkungsgrad der Staubabsaugung ist hoch. Außerdem kann sich der Staub ab einer bestimmten Schichtdicke selbsttätig vom Faltenfilter lösen und der Schwerkraft folgend in die Staubbox fallen.

Dadurch, daß die den Deckel tragende Fläche der Staubbox gegenüber der Strömungsrichtung der Ausblasluft derart geneigt ist, daß sich die Staubbox zur Maschine hin keilförmig verjüngt, sind staubvermeidende Strömungsverhältnisse für die Ausblasluft geschaffen, durch die der Staubabtransport optimiert wird.

Dadurch, daß der Deckel sich elastisch und dicht an der Staubbox festhält, ist sie besonders einfach zu öffnen bzw. leicht wieder verschließbar.

Die zum Öffnen des Deckels vorgesehenen seitlichen Einzüge der Staubbox erleichtern der Bedienperson dessen Untergreifen mit den Fingern und eine werkzeuglose Einhandbedienung beim Abnehmen, Entleeren und Wiederbefestigen der Staubbox.

Dadurch, daß im Eintrittsstutzen der Staubbox Dichtlippen angeordnet sind, die den Staubausblasstutzen der Handwerkzeugmaschine dichtend umgreifen, ist die Staubbox beim Betreiben der Handwerkzeugmaschine zuverlässig staubdicht.

Dadurch, daß der Faltenfilter nur im Deckel der Staubbox angeordnet ist, ist er besonders leicht auswechselbar, indem er entweder neu eingeklebt wird oder der gesamte Deckel mitsamt dem Filter ausgetauscht wird.

Dadurch, daß die Staubbox mit wippenartigen Arretierhebeln an der Handwerkzeugmaschine befestigbar ist, ist ihre Entnahme und Entleerung bzw. erneute Befestigung besonders bequem und zeitsparend möglich.

Dadurch, daß der Eintrittsstutzen der Staubbox mittels Ventil verschließbar ist, ist beim Lösen der Staubbox von der Handwerkzeugmaschine eir. ungewolltes Austreten von Staub wirksam verhinderbar.

### Zeichnung

Die ist Erfindung nachstehend anhand eines Ausführungsbeispiels mit zugehörigen Zeichnungen näher erläutert.

### Es zeigen

Figur 1 einen Längsschnitt einer Handwerkzeugmaschine mit erfindungsgemäßer Staubbox,
Figur 2 eine Draufsicht auf die Handwerkzeugmaschine gemäß Figur 1,
Figur 3 eine räumliche Ansicht der Staubbox ohne Deckel schräg von vorn
Figur 4 einen Längsschnitt der Staubbox ohne Deckel,
Figur 5 eine Ansicht der Staubbox von unten,
Figur 6 eine räumliche Draufsicht des Staubboxdeckels,
Figur 7 eine räumliche Unteransicht des Staubboxdeckels, Figur 8 einen Querschnitt des Staubboxdeckels,
Figur 9 einen Querschnitt des Faltenfilters des Staubboxdekkels
Figur 10 eine vergrößerten Querschnitt einer einzelnen Lamelle des Faltenfilters,
Figur 11 einen Längsschnitt eines Ausführungsbeispiels eines Eintrittsstutzens der Staubbox mit an die Dichtlippen anschließende Dichtklappen,
Figur 12 der Längsscnitt gemäß Figur 11 mit beaufschlagter Dichtlippe
Figur 13 ein weiteres Ausführungsbeispiel von Dichtklappen mit kurzen Dichtlippen und
Figur 14 und 15 eine letztes Ausführungsbeispiel von Dichtklappen mit kurzen Dichtlippen.

### Beschreibung des Ausführungsbeispiels

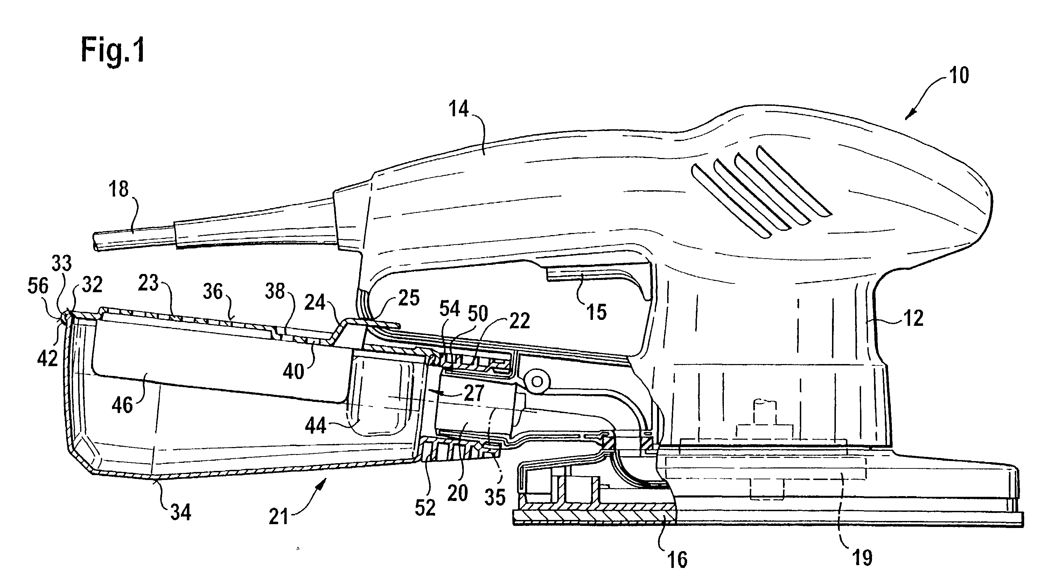

Der Längsschnitt in Figur 1 zeigte eine als Schwingschleifer ausgestaltete Handwerkzeugmaschine 10 mit einem Gehäuse 12, das einen Handgriff 14 mit Schalter 15 aufweist, an dem unten ein als Schleifplatte ausgestaltetes Werkzeug 16 bewegbar befestigt ist. Die Handwerkzeugmaschine 10 trägt am hinteren Ende des Handgriffs 14 eine elektrische Anschlußleitung 18 und im Inneren des Gehäuses 12 ein Lüfterrad 19. Dieses erzeugt beim Betrieb der Handwerkzeugmaschine über der Schleifplatte 16 einen Unterdruck. Dadurch wird Schleifstaub an und unter der Schleifplatte 16 abgesaugt und durch einen Ausblasstutzen 20 des Gehäuses 12 geblasen.

Der Ausblasstutzen 20 trägt einen darüber gestülpten Einblasstutzen 22 einer formsteifen, freitragend angeordneten Staubbox 21. Diese ist - bis auf die Einblasöffnung 27 des Einblasstutzens 22 und ihre Oberseite - luftdicht. Die Oberseite der Staubbox 21 wird durch einen Deckel 23 gebildet, aus dessen Oberseite 36 nach oben ein Haken 24 tritt zum Eingriff in eine Halteöffnung 25 im hinteren Bereich des Handgriffs 14. Mit dem Haken 24 hält sich die Staubbox 21 zusätzlich am Gehäuse 12 der Handwerkzeugmaschine 10 fest, so daß die Gehäusestruktur der Staubbox 21 mit besonders dünnen Wandquerschnitten und damit besonders leicht gebaut werden kann.
Der Deckel 23 der Staubbox 21 hält sich an der Oberkante 32 der Staubbox 21, die einen umlaufenden Wulst 33 bildet, federelastisch überrastend mit seinem Schnapprand 42 kraftund formschlüssig besonders dicht fest.

Die Unterseite 34 der Staubbox 21 verläuft gegenüber der Längsachse des Einblasstutzens 22 geneigt, so daß die Staubbox 21 im Längsschnitt keilförmig gegenüber der Achse 35 verläuft und sich zur Handwerkzeugmaschine 10 hin verjüngt.

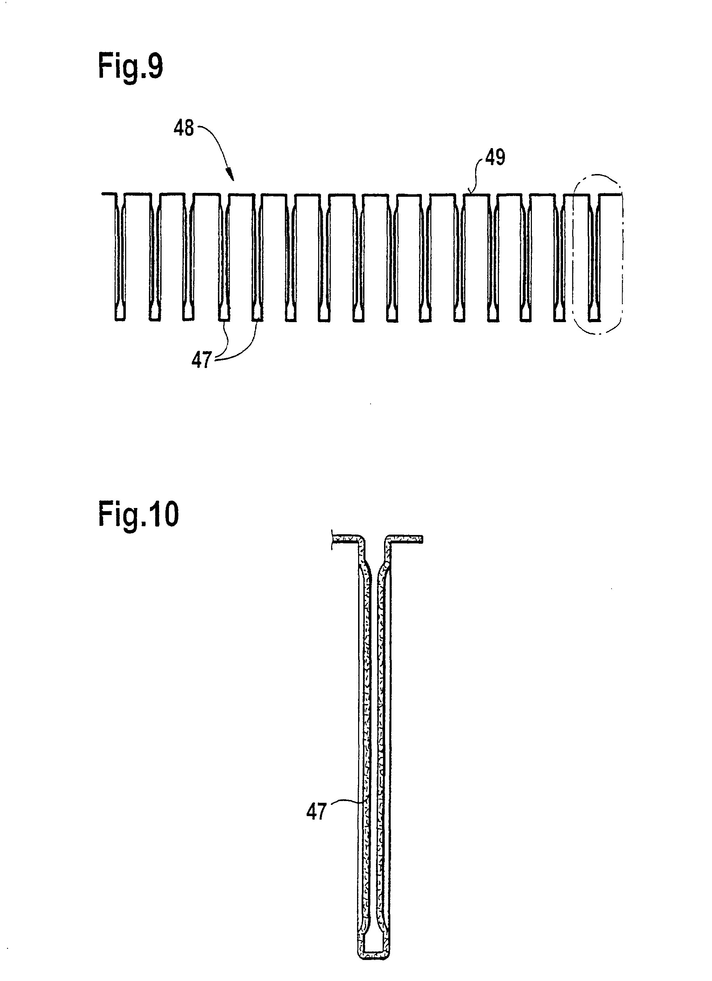

Die Oberseite 36 des Deckels 23 trägt kreisrunde Luftaustrittslöcher 40, denen ein als Faltenfilter ausgestaltetes Filterelement 48 aus Spezialpapier vorgeschaltet ist, so daß dessen Oberseite 49 (Fig. 9) der Unterseite des Deckels 23 zugewandt ist. Außerdem ist die Oberseite 36 des Deckels 23 im Bereich des Hakens 24 mit einem in die Staubbox 21 gerichteten Einzug 38 mit u-förmig verlaufender Kontur versehen, der die Struktur des Deckels 23 versteift und Freiraum zum Durchtritt größerer, weiter ausladender Gehäusekonturen anderer Handwerkzeugmaschinen bietet.

Die Staubbox 21 trägt auf gegenüberliegenden Seiten in ihrem vorderen Bereich nahe dem Einblasstutzen 22 zwei seitliche Einzüge 44, die ein Untergreifen des Deckels 23 durch die Finger des Bedienenden und damit ein bequemes Öffnen des Deckels 23 erleichtern.

Der Deckel 23 trägt einstückig zwei parallel zu den Seitenkanten 58 der Staubbox 21 verlaufende Seitenlamellen 46, die kielartig in das Innere der Staubbox 21 hineinragen und eine seitliche Begrenzung und einen mechanischen Schutz des Filterelements 48 bilden, falls der Deckel von der Staubbox 21 abgenommen und abgelegt wird bzw. falls der Staub vom Filterelement 48 abgeklopft wird.

Der Einblasstutzen 22 der Staubbox 21 weist im Inneren eine umlaufende Dichtlippe 50 auf, die den Ausblasstutzen 20 der Handwerkzeugmaschine luftdicht umschließt. Außerdem trägt der Einblasstutzen 22 der Staubbox 21 oben und unten Rippen 52, die die Steifigkeit der Staubbox 21 bei kleinem Wandquerschnitt verbessern.

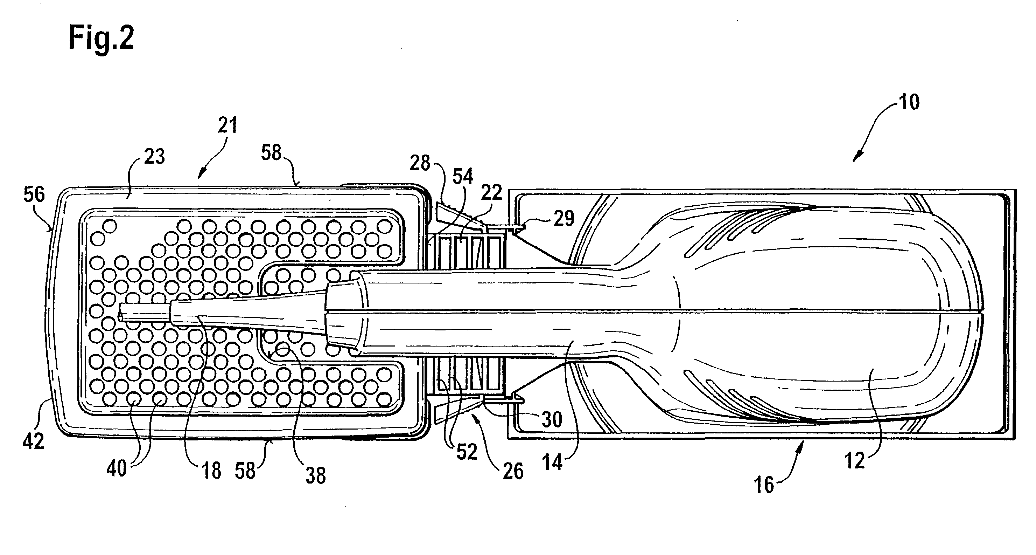

Figur 2 zeigt die zuvor genannten Einzelheiten der Handwerkzeugmaschine 10 mit der Staubbox 21, wobei über die Figur 1 hinaus besonders gut erkennbar sind: Der Einzug 38 des Dekkels 23, die Löcher 40 zum Durchtritt der vom Staub gereinigten Ausblasluft nach außen und eine Wippe 26 zum überrastenden Befestigen der Staubbox 21 an der Handwerkzeugmaschine 10. Die Wippe 26 der Staubbox 21 ist als zweiarmiger Hebel ausgestaltet, dessen einer Arm als Tastenarm 28 und dessen anderer Arm als Rastenarm 29 ausgestaltet ist. Die Wippe 26 ist mittels eines Filmscharniers 30 schwenkbar am Einblasstutzen 22 der Staubbox befestigt. Der Rastarm 29 hält sich an einem nicht näher bezeichneten seitlichen Vorsprung des Gehäuses 12 der Handwerkzeugmaschine 10 im Bereich deren Ausblasstutzens 20 elastisch vorgespannt fest.

Deutlich wird auch, daß die Grundfläche des Handwerkzeugs 10 durch die rechteckige Schleifplatte 16 gebildet wird, und daß die Hinterkante 56 der Staubbox 21 bzw. des Deckels 23 nach außen gewölbt ist.

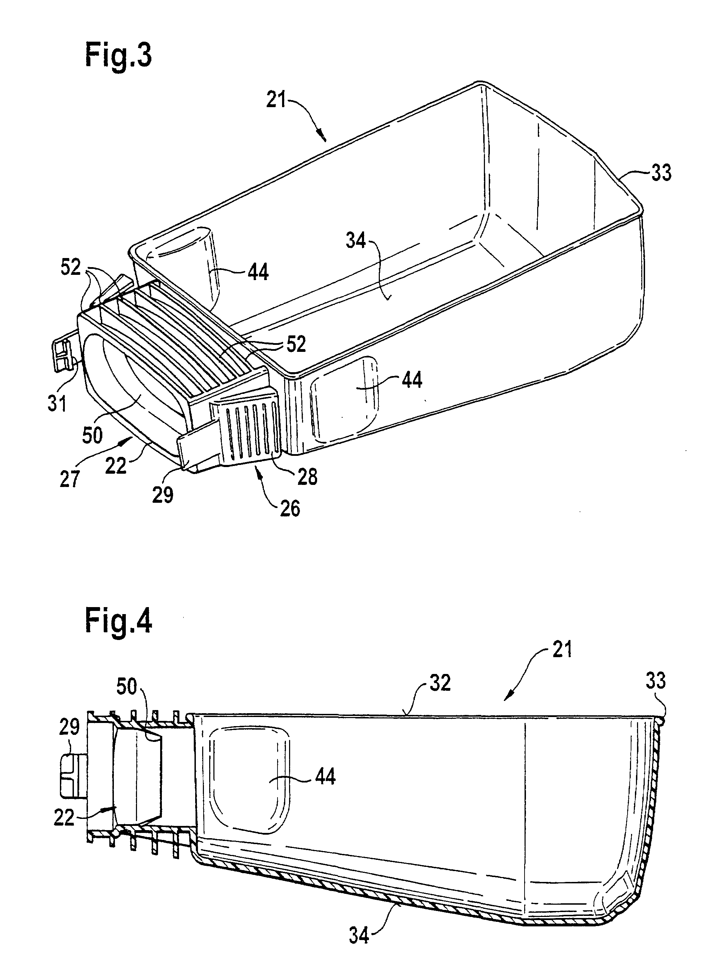

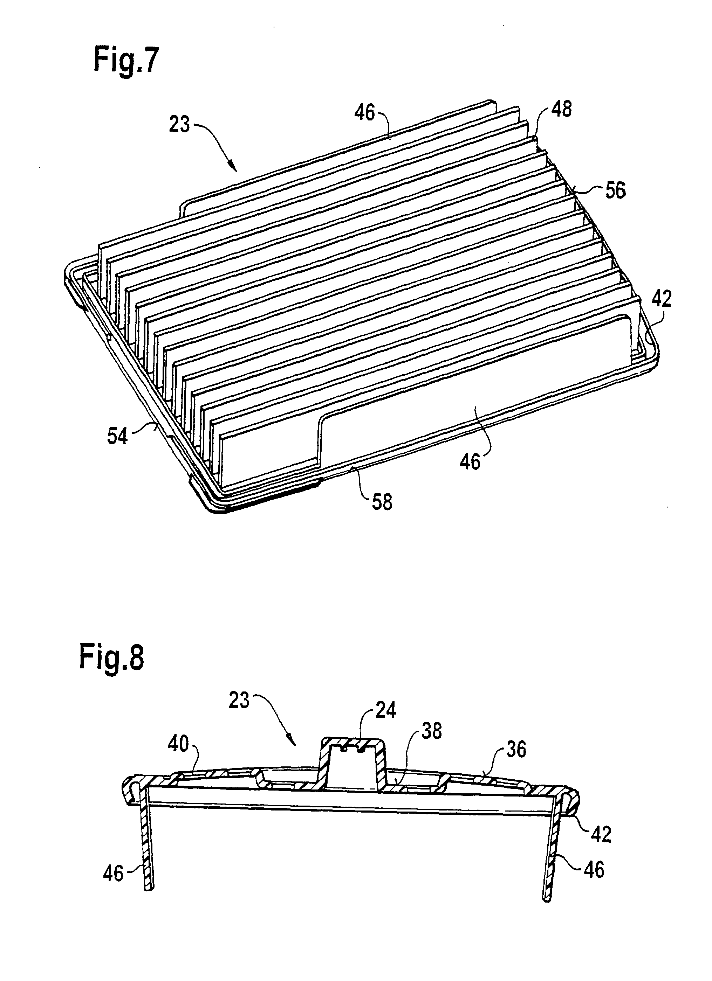

Die in Figur 3 gezeigte Einzelheit der Staubbox 21 ohne Dekkel 23 zeigt nochmals deren zu Figur 1 und 2 erwähnten Einzelheiten. Außerdem wird der Wulst 23 deutlich, der mit der Oberkante 32 geschlossen umläuft und gemeinsam mit dem Schnapprand 42 (Figur 1, 7) eine dicht schließende, bequem zu öffnende Verbindung zwischen dem Deckel 23 und der Staubbox 21 bilden. Außerdem sind die das seitliche Untergreifen des Deckels 23 und dessen Öffnen mit den Fingern erleichternden Einzüge 44 erkennbar. Deutlich erkennbar ist auch der Einblasstutzen 22 mit der umlaufenden Dichtlippe 50, die auf gegenüberliegenden Seiten angeordneten Wippen 26 sowie deren je einer Tastenarm 28 und Rastenarm 29 mit innenliegender Rastkante 31 zum Eingreifen in eine Ausnehmung des Ausblasstutzens 20 zum formschlüssigen Festhalten der Staubbox 21 an der Handwerkzeugmaschine 10.

Figur 4 zeigt den Längsschnitt der Staubbox 21 mit dem umlaufenden Wulst 33 an der Oberkante 32 der Staubbox 21, wobei besonders deutlich die Lage der Dichtlippe 50 innen im Einblasstutzen 22 der Staubbox 21 erkennbar ist.

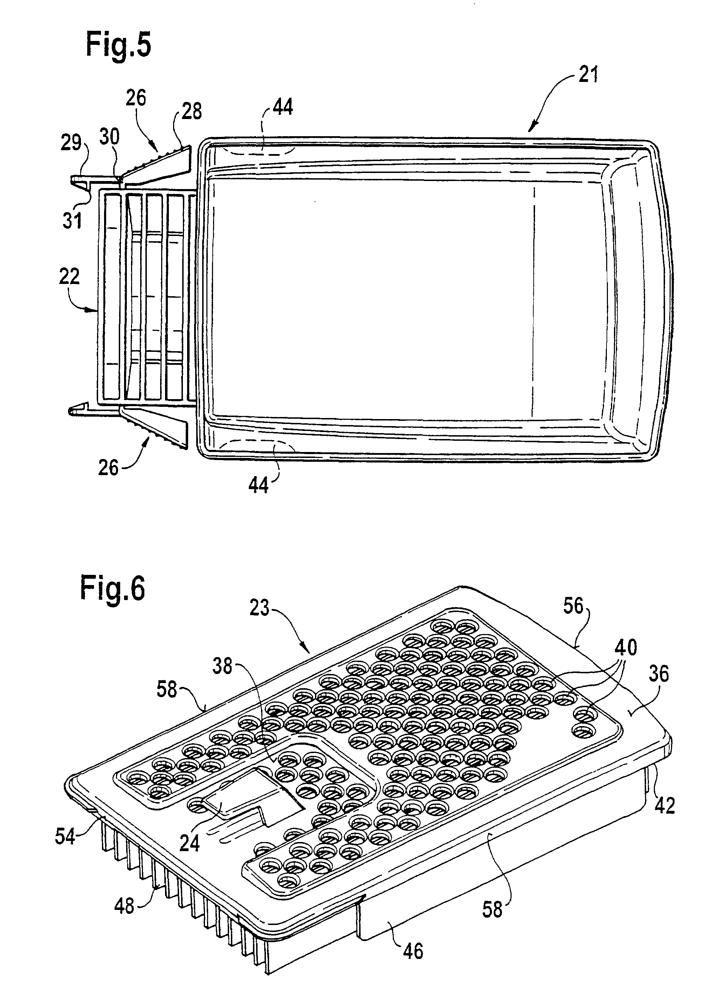

Figur 5 zeigt die Draufsicht der offenen Staubbox 21 mit der Oberkante 32, den Einzügen 44, dem Staubeinblasstutzen 22 und der Wippe 26. Besonders deutlich sind der Tastenarm 28 der Wippe 26 mit nicht näher bezeichneten Noppen, der Lastenarm 29 und die auf dessen Innenseite angeordnete Rastkante 31 zum Eingriff in eine nicht näher bezeichnete Ausnehmung der Handwerkzeugmaschine 10.

Figur 6 zeigt die räumliche Draufsicht des Deckels 23 der Staubbox 21 mit den runden Luftdurchtrittslöchern 40, die den Deckel 23 durchbrechen, der gewölbten Hinterkante 56, den geraden Seitenkanten 58, sowie der geraden Vorderkante 54. Deutlich sichtbar ist auch der Haken 24, der nach oben und vorn abgewinkelt aus dem in den Deckel 23 eingeprägten Einzug 38 austritt. Darüber hinaus sind die mit dem Deckel 23 einstückigen, kielartig nach unten ragenden Seitenlamellen 46 erkennbar, die als mechanischer Schutz vor Beschädigung des rippenartig nach unten ausgerichteten Faltenfilters 48 dienen.

Figur 7 zeigt eine räumliche Ansicht der Unterseite des Dekkels 23, wobei der Schnapprand 42, die kielartigen Seitenlamellen 46 und das mit in Längsrichtung der Staubbox 21 verlaufenden rippenartigen Lamellen 47 versehene, als Faltenfilter ausgestaltetes Filterelement 48 erkennbar werden. Darüber hinaus ist die nach außen gewölbte Hinterkante 56, die gerade Vorderkante 54 und die geraden Seitenkanten 58 sichtbar.

Aus dem Querschnitt des Deckels 23 gemäß Figur 8 wird die Anordnung der kielartigen Seitenlamellen 46, der umlaufende Schnapp-Rand 42, der Einzug 38 mit dem nach oben austretenden Haken 24 und die leicht gewölbt nach oben bzw. außen verlaufende Oberseite 36 mit den Luftdurchtrittsöffnungen 40 deutlich erkennbar.

Figur 9 zeigt die Einzelheit des als Lamellenfilter ausgebildeten Filterelements 48 zum nicht lösbaren Einsatz in den Deckel 23. Dessen Filterlamellen 47 verlaufen rippenartig parallel zu den Seitenlamellen 46 des Deckels 23 bzw. in Längsrichtung der Staubbox 21. Außerdem wird aus Figur 9 klar, daß die Filterlamellen 47 durch mäanderartiges Falten und Ausprägen zu einer ebenen Filterplatte oberflächenvergrößernd hergestellt wurden und daß das Filterelement 48 mit seiner Oberseite 49 der Unterseite des Deckels 23 zugewandt angeordnet, insbesondere daran geklebt oder geschweißt befestigt ist.

Die in Figur 10 gezeigte Vergrößerung einer einzelnen Filterlamelle 47 zeigt deren mäanderförmige Ausgestaltung sowie seitliche Ausprägungen. Diese Ausgestaltung bewirkt, daß bei Ansammlung einer bestimmten kritischen Staubmenge diese, der Schwerkraft folgend sich von der Filterlamelle 47 löst, um nach unten hin die Staubbox 21 zu fallen und das Filterelement 48 für einen optimalen Luftdurchtritt frei zu geben.

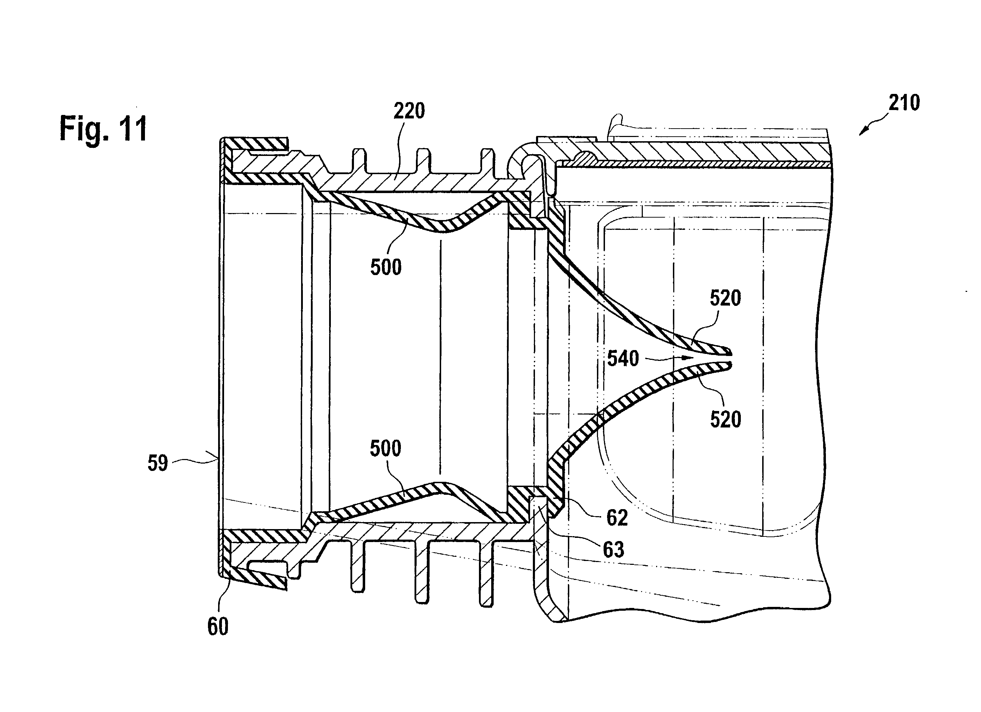

Figur 11 zeigt einen Längsschnitt als Ausschnitt der Staubbox 210 im Bereich des Einsaugstutzens 220. Dort sind Dichtlippen 500 angeordnet, die den Staubaustritts-Stutzen 200 einer Handwerkzeugmaschine abdichtend umgreifen und den Austritt von Staub bzw. den Eintritt von Fremdluft verhindern. Die Dichtlippen 500 sind nach innen bzw. zur Mitte des Einsaugstutzens hin konvex gewölbt und bilden quer zur Längsachse eine Art Wulst. Die elastische dünne Wand der Dichtlippen 500 sind zum Inneren der Staubbox hin fortgeführt und halten sich dort an rippenartigen Vorsprüngen der Staubbox fest. Der weiter zum Staubbox-Inneren sich erstreckende Bereich der Dichtlippen 500 ist jeweils als Dichtklappe 520 ausgestaltet. Damit wird der Staub im Inneren der Staubbox 210 nach Abschalten des Gerätes wirkungsvoll zurückzuhalten. Damit sind die Funktionen Abdichten des Eintritt-Stutzens 220 und Staubaustrittssicherung wirkungsvoll miteinander verbunden.

Das Dicht- und Staubrückhalteelement besteht aus einem gummielastischen Material wie Elastomer oder NBR. Dieses Formteil zeichnet sich durch einen günstigen Preis aus und kann in verschiedenen Boxengrößen Anwendung finden.

Die Dichtlippen 500 werden durch Aufschieben der Staubbox auf den Staubausstrittsstutzen zugehöriger Handwerkzeugmaschinen elastisch so verformt, daß die vorstehende Wandung abdichtet.

Das Formteil ist zwecks Lagesicherung mit einem umlaufenden Kragen 60 auf der Einblastutzenstirnseite 59 und einer umlaufenden Rastnase 62 auf einer umlaufenden Rippe 63 der Einblasstutzenrückseite versehen. Statt des umlaufenden Kragens im Frontbereich können auch - um ein Hineinziehen in den Einblasstutzen 220 zu verhindern - Rastnasen oder Zapfen angebracht sein. Die einwandfreie Funktion der Schließklappen 520 wird durch konische bzw. gekrümmte Form der einzelnen Klappen sowie durch geeignete Auswahl des elastischen Werkstoffes gewährleistet, so daß der Dichtschlitz 540 zwischen den Stirnflächen der Klappen 520 stets sicher abgedichtet ist, wenn kein Luftstrom von der Maschinenseite her diese zu öffnen sucht.

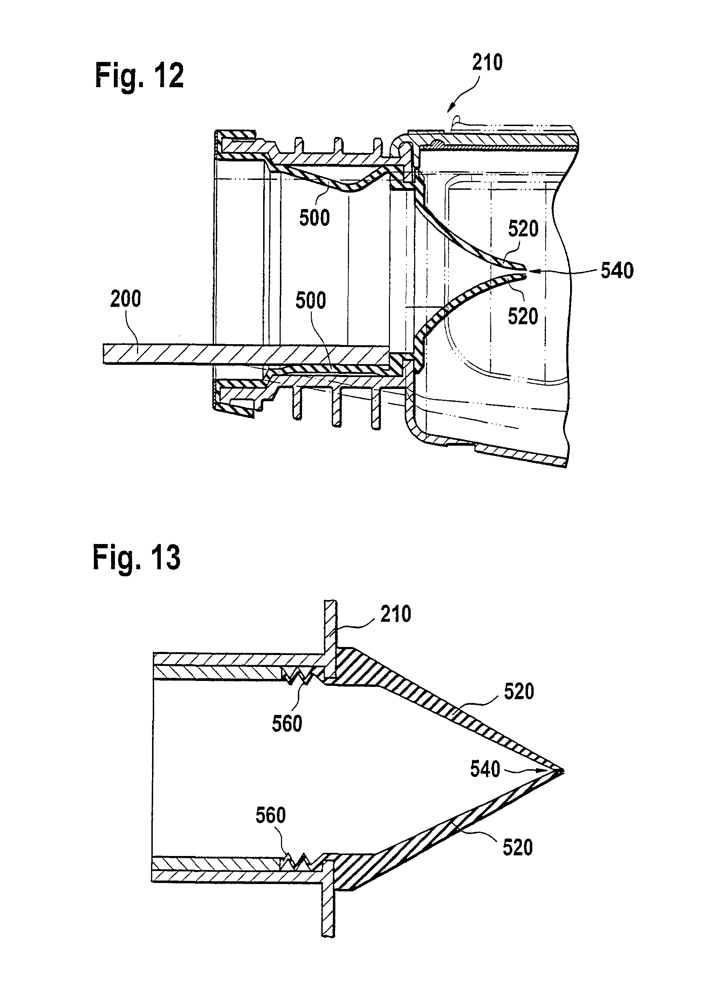

In Figur 12 ist der untere Bereich der Dichtlippe 500 beim Sitzt auf dem Staubaustrittsstutzen 200 einer zugehörigen Handwerkzeugmaschine gezeigt, die übrigen Einzelheiten stimmen mit Figur 11 überein.

In Figur 13 ist eine als Faltenbalg ausgestaltete Variante von Dichtlippen 560 gezeigt.

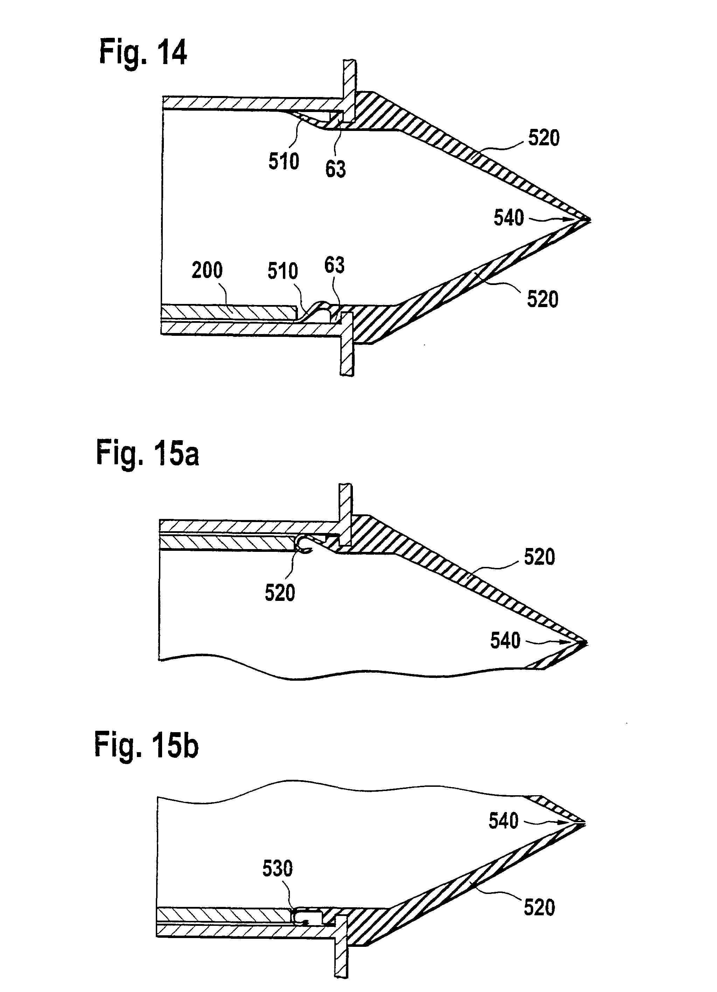

Figur 14 zeigt im oberen Teil der Zeichnung eine kurze Dichtlippe 510, die sich nur über eine Rastnut 62 auf einer umlaufenden Rippe 63 der Einblasstutzenrückseite festhalten. Die Dichtlippen 510 drücken sich mit Vorspannung gegen die Innenseite des Eintrittstutzens 220, so daß beim Aufschieben auf den Staubaustrittsstutzen einer Handwerkzeugmaschine die Dichtlippe dazwischen tritt und eine entsprechende Dichtwirkung entfalten kann.

In Figur 15 a sollen beide Dichtlippen 520 als nach innen gerollter Wulst und in Figur 15 b al nach außen gerollter Wulst ausgestaltet sein.

## Patentansprüche

1. Handwerkzeugmaschine (10) mit einer in ihrem Gehäuse (12) angeordneten Staubabsaugung (19) und mit einem dieser nachgeschalteten Ausblasstutzen (20), an dem lösbar eine Staubbox (21) zum Staubsammeln, insbesondere freitragend, mit ihrem Einblasstutzen (22) befestigbar ist, die - bis auf zwei Seiten - luftdicht ist, wobei die Oberseite (36) der Staubbox (21) Luftaustrittsöffnungen (40) aufweist und auf der Innenseite ein staubdichtes Filterelement (48), insbesondere Faltenfilter, trägt, **dadurch gekennzeichnet,**
**daß** im Inneren des Einblasstutzens (220) ein als separates Teil angeordnete Dichtlippenpaar (500) vorgesehen ist, das einstückig mit ins Innere der Staubbox (200) ragenden Schließklappen (520, 1520) verbunden ist.

## Claims

1. Powered hand tool (10) having a dust extractor (19) arranged in its housing (12) and having an exhaust connecting piece (20) which is connected downstream of the dust extractor (19) and to which a dust box (21) for collecting dust, with its inlet connecting piece (22), can be fastened, in particular in an unsupported manner, which dust box (21) - except on two sides - is airtight, the top side (36) of the dust box (21) having air-discharge openings (40) and carrying a dust-tight filter element (48), in particular a folded filter, on the inside, **characterized in that** a sealing-lip pair (500) arranged as a separate part is provided in the interior of the inlet connecting piece (220) and is connected in one piece to closing flaps (520, 1520) projecting into the interior of the dust box (200).

## Revendications

1. Machine portative (10) avec une aspiration de poussière (19) placée dans son boîtier (12) et avec un raccord de sortie (20) en aval de celui-ci, sur lequel on peut fixer de façon amovible un conteneur à poussière (21) pour recueillir la poussière, en particulier en saillie, avec son raccord d'insufflation (22) qui - sauf sur deux côtés - est étanche à l'air, le côté supérieur (36) du conteneur à poussière (21) présentant des ouvertures de sortie d'air (40) et portant sur le côté intérieur un élément de filtre (48) étanche à la poussière, en particulier un filtre à plis,
**caractérisée en ce qu'**
à l'intérieur du raccord d'insufflation (200) on prévoit en tant que pièce séparée une paire de lèvres d'étanchéité (500) reliée d'une pièce aux clapets de fermeture (520, 1520) dépassant à l'intérieur du conteneur à poussière (200).
